# EUROPÄISCHE PATENTSCHRIFT

(11) **EP 0 804 654 B1**
(45) Veröffentlichungstag und Bekanntmachung des Hinweises auf die Patenterteilung: **18.09.2002**
(21) Anmeldenummer: 96903962.7
(22) Anmeldetag: 01.02.1996
(51) Int. Cl.: E03B 7/07, E03B 5/00

(54) **REGELVORRICHTUNG FÜR EINE WASSERVERSORGUNGSANLAGE**
DEVICE FOR REGULATING A WATER SUPPLY PLANT
DISPOSITIF DE REGULATION POUR INSTALLATION D'ALIMENTATION EN EAU

(30) Priorität: 02.02.1995 DE 19503403
(43) Veröffentlichungstag der Anmeldung: 05.11.1997
(73) Patentinhaber: Leader Holding S.r.l., 56031 Bientina (PI) (IT)
(72) Erfinder: CARMIGNANI, Claudio, 55100 Lucca (IT); CIURLO, Ugo, 55100 Lucca (IT); MARTINI, Luciano, 56025 Pontedera (IT); NIMBACH, Martin, 86956 Schongau (DE); PINOLI, Luca, 56028 S. Miniato (IT)
(74) Vertreter: Vogeser, Werner, Dipl.-Ing.
(86) Internationale Anmeldenummer: EP9600429
(87) Internationale Veröffentlichungsnummer: WO96023936

(56) Entgegenhaltungen:
- DE-A- 3 817 018
- FR-A- 2 690 525
- GB-A- 2 283 925
- US-A- 5 139 044

## Beschreibung

Die Erfindung betrifft eine Vorrichtung entsprechend dem Oberbegriff des Anspruchs 1.

Bei derartigen Vorrichtungen ist es bekannt, als Druckschalter einen Differenzdruckschalter zu verwenden, der wegen seiner relativen Unempfindlichkeit insbesondere bei geringer Wasserentnahme zu häufigen Ein- und Ausschaltvorgängen der Pumpe und damit zu einem pulsierenden Wasserfluß, aber auch zu störenden Geräuschen führt, die sich über das Leitungssystem ausbreiten.

In dem Dokument US-A-5 139 044 wird eine Vorrichtung beschrieben, bei der der Wasserfluß mittels eines verschieblichen kolbens erfaßt wird.

Der Erfindung liegt die Aufgabe zugrunde, die Vorrichtung der eingangs genannten Art so zu verbessern, daß eine möglichst automatische und konstante Regelung des Wasserdruckes und des Wasserflusses erreicht wird.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Durch die Verwendung einer Turbine werden unabhängig vom Druck innerhalb des zulässigen Druckbereiches Ein- und Ausschaltvorgänge der Pumpe vermieden, da die Turbine auch bei einem geringen Wasserfluß angetrieben wird, und damit die Pumpe auch bei geringer Wasserentnahme eingeschaltet bleibt. Als Turbine kann ein Wasserrad verwendet werden, wie es in üblichen Wasserzählern verwendet wird.

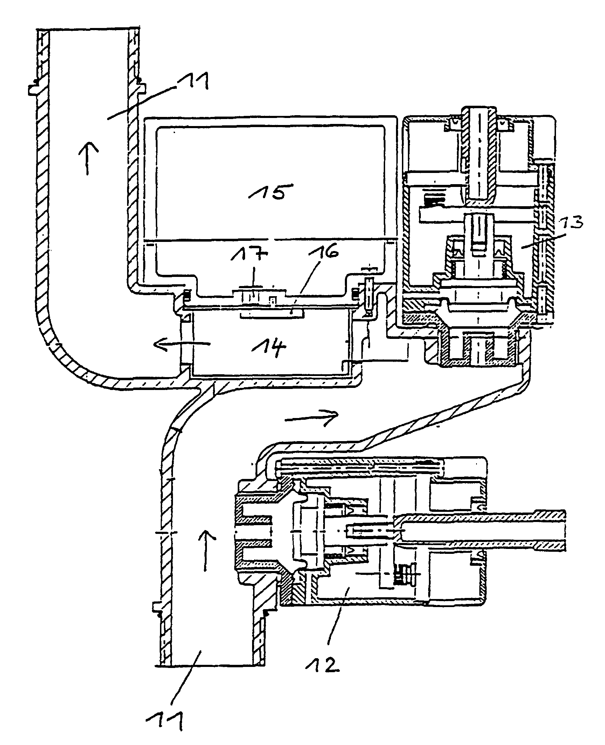

Die Erfindung wird nachstehend anhand der beigefügten Zeichnung beispielsweise erläutert, die im Schnitt eine schematische Darstellung eines Teils der erfindungsgemäßen Vorrichtung zeigt.

Über eine nichtgezeigte Elektropumpe und ein nichtgezeigtes Einwegventil fließt Wasser in der Zeichnung unten in eine Hauptwasserleitung 11 einer Wasserversorgungsanlage und tritt oben in ein nichtgezeigtes Leitungssystem aus, an das verschiedene Verbraucher angeschlossen sind.

An die Hauptwasserleitung 11 ist ein einstellbarer Druckschalter 13 angeschlossen, der bei einem Mindestdruck von z.B. 1,5 bis 2 bar die Pumpe einschaltet, so daß der erforderliche Druck aufgebaut wird. Sobald Wasser entnommen wird, wird eine in die Hauptwasserleitung 11 eingebaute Turbine 14 angetrieben. Die Drehung der Turbine wird über einen Drehsignalgeber, der aus einem auf der Achse der Turbine sitzenden Magneten 16 und einem fest angeordneten Magnetfeldsensor 17 besteht, zu einer Steuerelektronik 15 signalisiert, die die Pumpe eingeschaltet hält, solang die als Strömungssensor wirkende Turbine 14 eine Wasserentnahme feststellt. Der Vorteil der Turbine besteht vor allem darin, daß sie auch bei sehr geringer Wasserentnahme reagiert und damit der Betrieb der Pumpe in der gewünschten Weise geregelt wird.

Um zu vermeiden, daß bei Unterschreiten eines Mindestdruckes von z.B. 0,5 bis 1 bar die Pumpe trockenläuft, kann ein Minimumdruckschalter 12 an die Hauptwasserleitung 11 angeschlossen werden, der im Bedarfsfall die Pumpe abschaltet.

Anstelle dieses Minimumdruckschalters 12 kann aber auch die Steuerelektronik 15 so ausgebildet sein, daß sie die Pumpe nach einer bestimmten Zeitdauer abschaltet, während der der am Druckschalter 13 eingestellte Druck unterschritten wird. Diese Zeitdauer kann praktischerweise etwa 5 Sekunden betragen.

Ein oberer Druckwert braucht nicht berücksichtigt zu werden, da der in der Anlage aufgebaute Maximaldruck dem nominalen Druck der Pumpe entspricht.

## Patentansprüche

1. Vorrichtung zur automatischen und konstanten Regelung des Wasserdruckes und des Wasserflusses in einer Wasserversorgungsanlage, bestehend aus einer in eine Hauptwasserleitung (11) schaltbaren Elektropumpe, einem an die Hauptwasserleitung (11) anschließbaren, einstellbaren Druckschalter (13), und einer Steuerelektronik (15), die geeignet ist, in Gebrauschsstellung bei Unterschreiten eines bestimmten wasserdruckes in der Hauptwasserleitung (11) die Pumpe einzuschalten
**gekennzeichnet durch**
eine in die Hauptwasserleitung (11) einbaubare Turbine (14) der Vorrichtung als Strömungssensor, der mit einem Drehsignalgeber (16, 17) der Vorrichtung zusammenwirkt, der an die Steuerelektronik (15) angeschlossen ist, um die Pumpe in Gebrauch nach dem Einschalten solange in Betrieb zu halten, solange der Strömungssensor einen Wasserfluß feststellt.

2. Vorrichtung nach Anspruch 1,
**dadurch gekennzeichnet, daß**
der Drehsignalgeber aus einem an der Turbine (14) angeordneten Magneten (16) und einem Magnetfeldsensor (17) besteht.

3. Vorrichtung nach Anspruch 1 oder 2,
**gekennzeichnet durch**
einen an die Hauptwasserleitung (11) anschließbaren Minimumdruckschalter (12) der Vorrichtung.

4. Vorrichtung nach einem der Ansprüche 1 oder 2,
**dadurch gekennzeichnet, daß**
die Steuerelektronik (15) geeignet ist die Pumpe bei Unterschreiten eines eingestellten Minimaldruckes nach einer bestimmten Zeitdauer abzuschalten.

## Claims

1. A device for constant automatic regulation of the water pressure and the water flow in a water supply installation, comprising an electric pump which can be fitted into a main water pipe (11), an adjustable pressure switch (13) which can be connected to the main water pipe (11), and an electronic control unit (15) which is suitable in the position of use for switching on the pump when the water pressure in the main water pipe (11) falls below a given pressure, **characterised by** a turbine (14) of the device, which can be fitted into the main water pipe (11), as a flow sensor co-operating with a rotary signal generator (16, 17) of the device, which is connected to the electronic control unit (15) in order in use to keep the pump in operation after it is switched on as long as the flow sensor detects a flow of water.

2. A device according to claim 1 **characterised in that** the rotary signal generator comprises a magnet (16) arranged at the turbine (14) and a magnetic field sensor (17).

3. A device according to claim 1 or claim 2 **characterised by** a minimum pressure switch (12) of the device, which can be connected to the main water pipe (11).

4. A device according to one of claims 1 and 2 **characterised in that** the electronic control unit (15) is suitable for switching off the pump when the water pressure falls below a set minimum pressure after a given period of time.

## Revendications

1. Dispositif pour réguler de manière automatique et maintenir constants la pression de l'éau et l'écoulement de l'eau dans une installation de distribution d'eau, comprenant une pompe électrique qui peut être insérée dans une conduite d'eau principale (11), un manocontact (13) réglable qui peut être relié à la conduite d'eau principale (11) et une électronique de commande (15) qui, dans la position d'utilisation, est destinée à mettre en marche la pompe lorsque la pression dans la conduite d'eau principale (11) est inférieure à une pression déterminée, **caractérisé par** une turbine (14) du dispositif insérée dans la conduite d'eau principale en tant que détecteur d'écoulement, qui coopère avec un transmetteur de signal (16, 17) du dispositif connecté à l'électronique de commande (15), aux fins de maintenir la pompe en service après sa mise ne marche jusqu'à ce que le détecteur d'écoulement détecte un écoulement d'eau.

2. Dispositif selon la revendication 1, **caractérisé en ce que** le transmetteur de signal est constitué d'un aimant (16) placé sur la turbine (14) et d'un détecteur de champ magnétique (17).

3. Dispositif selon la revendication 1 ou 2, **caractérisé par** un manocontact à pression minimale (12) du dispositif qui peut être relié à la conduite d'eau principale (11).

4. Dispositif selon une des revendications 1 ou 2, **caractérisé en ce que** l'électronique de commande (15) est agencée pour couper la pompe après un certain laps de temps, lorsque la pression est inférieure à une pression minimale réglée.
